(19) **Europäisches Patentamt**
**European Patent Office**
**Office européen des brevets**

(11) **EP 4 641 697 A1**

(12) **EUROPEAN PATENT APPLICATION**
published in accordance with Art. 153(4) EPC

(43) Date of publication:
**29.10.2025 Bulletin 2025/44**

(21) Application number: **23906445.4**

(22) Date of filing: **17.10.2023**

(51) International Patent Classification (IPC):
*H01M 4/62* (2006.01)     *H01M 4/02* (2006.01)
*H01M 4/04* (2006.01)     *H01M 4/13* (2010.01)
*H01M 4/139* (2010.01)

(52) Cooperative Patent Classification (CPC):
**H01M 4/02; H01M 4/04; H01M 4/13; H01M 4/139;
H01M 4/62; Y02E 60/10**

(86) International application number:
**PCT/JP2023/037547**

(87) International publication number:
**WO 2024/135070 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.12.2022 JP 2022203379**

(71) Applicant: **Denka Company Limited
Tokyo 103-8338 (JP)**

(72) Inventors:
- **NAGAI, Tatsuya
  Tokyo 103-8338 (JP)**
- **MATSUI, Mizuki
  Tokyo 103-8338 (JP)**
- **KITAE, Yuma
  Tokyo 103-8338 (JP)**
- **ITO, Tetsuya
  Tokyo 103-8338 (JP)**

(74) Representative: **Hoffmann Eitle
Patent- und Rechtsanwälte PartmbB
Arabellastraße 30
81925 München (DE)**

(54) **POSITIVE ELECTRODE COMPOSITION, COATING LIQUID FOR FORMING POSITIVE
ELECTRODE, POSITIVE ELECTRODE, BATTERY, METHOD FOR PRODUCING COATING
LIQUID FOR FORMING POSITIVE ELECTRODE, METHOD FOR PRODUCING POSITIVE
ELECTRODE, AND METHOD FOR PRODUCING BATTERY**

(57) A positive electrode composition containing a first carbon black, a second carbon black, and an active material, wherein: the first carbon black has a BET specific surface area of 200 $m^2$/g or more and a crystallite size (Lc) of 17 Å or less; the second carbon black has a BET specific surface area of 100 $m^2$/g or more and a crystallite size (Lc) of 19 Å or more; and a ratio $C_2/C_1$ of a content $C_2$ of the second carbon black with respect to a content $C_1$ of the first carbon black is 0.1 or more and 0.45 or less.

EP 4 641 697 A1

Description

## TECHNICAL FIELD

The present disclosure relates to: a positive electrode composition; a coating liquid for forming a positive electrode; a positive electrode; a battery; a method for producing a coating liquid for forming a positive electrode; a method for producing a positive electrode; and a method for producing a battery.

## BACKGROUND

As environmental/energy issues become more pressing, active efforts are underway into developing technologies aimed at realizing a low-carbon society in which reliance on fossil fuels is reduced. Such technological developments span a wide range and include: the development of low-polluting vehicles such as hybrid electric vehicles and electric vehicles, etc.; the development of power generation/storage systems for natural energy such as solar voltaic power generation and wind-power generation, etc.

One necessary key device common to the foregoing technologies is a battery, and such a battery is demanded to have a high energy density in order for systems to be made smaller. Further, there is a demand for high output properties in order to enable a stable supply of electric power without being affected by a usage environment temperature. Furthermore, there is also a demand for good cycle properties, etc., which can withstand long-term usage. Due thereto, conventional lead storage batteries, nickel-cadmium batteries, and nickel-hydrogen batteries are rapidly being substituted by lithium-ion secondary batteries which have higher energy densities, output properties, and cycle properties.

Conventionally, a positive electrode of a lithium-ion battery is produced by coating a current collector with a positive electrode paste that contains a positive electrode active material, a conductive material, and a binding material (also called a binder). Hitherto, lithium-containing composite oxides such as lithium cobalt oxide and lithium manganese oxide, etc., have been used as the positive electrode active material. Further, since the positive electrode active material has poor conductivity, a conductive material such as carbon black, etc., was added to a positive electrode paste with an objective of imparting conductivity thereto (for example, Patent Document 1).

## CITATION LIST

### PATENT LITERATURE

Patent Document 1: JP 2008-227481 A

## SUMMARY OF INVENTION

### TECHNICAL PROBLEM

Recently, there are demands for further performance improvements in batteries such as lithium-ion secondary batteries, etc.

The present disclosure has an objective of providing a positive electrode composition that can realize a positive electrode having low electrode plate resistance and a battery having excellent discharge rate properties. Further, the present disclosure has an objective of providing: a coating liquid for forming a positive electrode that can realize a positive electrode having low electrode plate resistance and a battery having excellent discharge rate properties; and a method for producing the same. Further, the present disclosure has an objective of providing: a positive electrode that can realize a battery having excellent discharge rate properties; and a method for producing the same. Furthermore, the present disclosure has an objective of providing: a battery provided with the positive electrode described above; and a method for producing the same.

## SOLUTION TO PROBLEM

The present disclosure relates to <1> to <11> below.

<1> A positive electrode composition containing a first carbon black, a second carbon black, and an active material, wherein:

the first carbon black has a BET specific surface area of 200 $m^2$/g or more and a crystallite size (Lc) of 17 Å or less;

the second carbon black has a BET specific surface area of 100 $m^2/g$ or more and a crystallite size (Lc) of 19 Å or more; and

a ratio $C_2/C_1$ of a content $C_2$ of the second carbon black with respect to a content $C_1$ of the first carbon black is 0.1 or more and 0.45 or less.

<2> The positive electrode composition described in <1>, wherein:

the BET specific surface area of the first carbon black is 200 $m^2/g$ or more and 400 $m^2/g$ or less; and
the BET specific surface area of the second carbon black is 100 $m^2/g$ or more and 400 $m^2/g$ or less.

<3> The positive electrode composition described in <1> or <2>, wherein:

the crystallite size (Lc) of the first carbon black is 14 Å or more and 17 Å or less; and

the crystallite size (Lc) of the second carbon black is 19 Å or more and 25 Å or less.

<4> A positive electrode including a composite layer comprising the positive electrode composition described in any one of <1> to <3>.

<5> A battery provided with the positive electrode described in <4>.

<6> A coating liquid for forming a positive electrode, the coating liquid containing a first carbon black, a second carbon black, an active material, and a liquid medium wherein:

the first carbon black has a BET specific surface area of 200 $m^2/g$ or more and a crystallite size (Lc) of 17 Å or less;

the second carbon black has a BET specific surface area of 100 $m^2/g$ or more and a crystallite size (Lc) of 19 Å or more; and

a ratio $C_2/C_1$ of a content $C_2$ of the second carbon black with respect to a content $C_1$ of the first carbon black is 0.1 or more and 0.45 or less.

<7> A method for producing a coating liquid for forming a positive electrode, the method including

a slurry preparation step for preparing a first slurry containing a first carbon black and a first liquid medium, and a second slurry containing a second carbon black and a second liquid medium, and

a mixing step for mixing the first slurry, the second slurry, and an active material to obtain a coating liquid for forming a positive electrode, wherein:

the first carbon black has a BET specific surface area of 200 $m^2/g$ or more and a crystallite size (Lc) of 17 Å or less;

the second carbon black has a BET specific surface area of 100 $m^2/g$ or more and a crystallite size (Lc) of 19 Å or more; and

a ratio $C_2/C_1$ of a content $C_2$ of the second carbon black with respect to a content $C_1$ of the first carbon black in the coating liquid for forming a positive electrode is 0.1 or more and 0.45 or less.

<8> A method for producing a positive electrode including a current collector and a composite layer, the method including

a coating liquid preparation step for preparing a coating liquid for forming a positive electrode, the coating liquid containing a first carbon black, a second carbon black, an active material, and a liquid medium,
a positive electrode formation step for coating the current collector with the coating liquid for forming a positive electrode to form the composite layer on the current collector,

wherein:

the first carbon black has a BET specific surface area of 200 m$^2$/g or more and a crystallite size (Lc) of 17 Å or less;

the second carbon black has a BET specific surface area of 100 m$^2$/g or more and a crystallite size (Lc) of 19 Å or more; and

a ratio $C_2/C_1$ of a content $C_2$ of the second carbon black with respect to a content $C_1$ of the first carbon black in the coating liquid for forming a positive electrode is 0.1 or more and 0.45 or less.

<9> The production method described in <8>, wherein the coating liquid preparation step is a step in which the coating liquid for forming a positive electrode is obtained by the production method described in <7>.

<10> A method for producing a battery provided with a positive electrode including a current collector and a composite layer, the method including

a coating liquid preparation step for preparing a coating liquid for forming a positive electrode, the coating liquid containing a first carbon black, a second carbon black, an active material, and a liquid medium, and

a positive electrode formation step for coating the current collector with the coating liquid for forming a positive electrode to form the composite layer on the current collector,

wherein:

the first carbon black has a BET specific surface area of 200 m$^2$/g or more and a crystallite size (Lc) of 17 Å or less;

the second carbon black has a BET specific surface area of 100 m$^2$/g or more and a crystallite size (Lc) of 19 Å or more; and

a ratio $C_2/C_1$ of a content $C_2$ of the second carbon black with respect to a content $C_1$ of the first carbon black in the coating liquid for forming a positive electrode is 0.1 or more and 0.45 or less.

<11> The production method described in <10>, wherein the coating liquid preparation step is a step in which the coating liquid for forming a positive electrode is obtained by the production method described in <7>.

## EFFECTS OF INVENTION

According to the present disclosure, there is provided a positive electrode composition that can realize a positive electrode having low electrode plate resistance and a battery having excellent discharge rate properties. Further, according to the present disclosure, there are provided: a coating liquid for forming a positive electrode that can realize a positive electrode having low electrode plate resistance and a battery having excellent discharge rate properties; and a method for producing the same. Further, according to the present disclosure, there are provided: a positive electrode that can realize a battery having excellent discharge rate properties; and a method for producing the same. Furthermore, according to the present disclosure, there are provided: a battery provided with the positive electrode described above; and a method for producing the same.

## DESCRIPTION OF EMBODIMENTS

A preferred embodiment of the present disclosure is explained in detail below. Note that carbon black is sometimes abbreviated as "CB" herein. Further, a hyphen "-" is used herein to indicate a numerical range which includes the numerical values appearing before and after the hyphen. Specifically, the description "X-Y" (wherein X and Y are both numerical values) indicates "X or more and Y or less".

<Coating liquid for forming positive electrode>

A coating liquid for forming a positive electrode according to the present embodiment contains a first carbon black, a second carbon black, an active material, and a liquid medium. In the present embodiment, the first carbon black has a BET specific surface area of 200 m$^2$/g or more and a crystallite size (Lc) of 17 Å or less, and the second carbon black has a BET specific surface area of 100 m$^2$/g or more and a crystallite size (Lc) of 19 Å or more. Further, in the present embodiment, a ratio $C_2/C_1$ of a content $C_2$ of the second carbon black with respect to a content $C_1$ of the first carbon black is 0.1 or more and 0.45 or less.

Herein, the crystallite size (Lc) of the carbon black is measured in compliance with JIS R 7651. Note that the crystallite size (Lc) of the carbon black means the crystallite size in the c-axis direction of a carbon black crystalline layer.

Note that the degree of structural development (structures with connected primary particles, that is, primary aggregates) in the carbon black greatly differs depending on differences in thermal history during synthesizing (for example, thermal histories caused by: thermal decomposition and combustion reaction of fuel oil; thermal decomposition and combustion reaction of raw materials; and rapid cooling and reaction termination by a cooling medium, etc.) and in primary particle collision frequencies, etc. It can be said that the larger is the crystallite size (Lc), the more developed is the structure of the carbon black.

Herein, the BET specific surface area of the carbon black is measured by a static capacity method in compliance with JIS Z 8830 by using nitrogen as an adsorbate.

The coating liquid for forming a positive electrode according to the present embodiment is coated and dried to obtain a composite layer comprising a positive electrode composition. That is, by coating a current collector with the coating liquid for forming a positive electrode according to the present embodiment and drying, it is possible to obtain a positive electrode including a current collector and a composite layer provided on the current collector. The positive electrode obtained from the coating liquid for forming a positive electrode according to the present embodiment makes it possible to realize a battery having small internal resistance and excellent discharge rate properties.

In the present embodiment, although the reasons why the above effects are exhibited are not completely clear, the thoughts of the applicant are as described below. The coating liquid for forming a positive electrode according to the present embodiment contains: a first carbon black having a small crystallite size (Lc), a low degree of structural development, and a large specific surface area; and a second carbon black having a large crystallite size (Lc) and a high degree of structural development. It is thought that due to having a low degree of structural development and a large specific surface area, the first carbon black is easily distributed on a surface of the active material in the positive electrode composition. Further, it is thought that due to having a high degree of structural development, the second carbon black is easily disposed between an active material and an active material in the positive electrode composition. Due to the foregoing, it is thought that the above effects are obtained by combining and using a first carbon black and a second carbon black at appropriate weight ratios, which enables the conductive material to be efficiently disposed both between active material surfaces and between the active materials, and conductive paths to be efficiently formed.

In the present embodiment, the first carbon black and the second carbon black are used in combination. The first carbon black has a BET specific surface area of 200 m$^2$/g or more and a crystallite size (Lc) of 17 Å or less. The second carbon black has a BET specific surface area of 100 m$^2$/g or more and a crystallite size (Lc) of 19 Å or more.

The BET specific surface area of the first carbon black is 200 m$^2$/g or more, and from the perspective of further increasing a contact surface area with the positive electrode active material and obtaining higher conductivity, may be 220 m$^2$/g or more, 240 m$^2$/g or more, 260 m$^2$/g or more, or 280 m$^2$/g or more. Further, the BET specific surface area of the first carbon black is, for example, 400 m$^2$/g or less, and from the perspective of being easily dispersed more uniformly around the positive electrode active material, may be 380 m$^2$/g or less, 360 m$^2$/g or less, or 340 m$^2$/g or less. That is, the BET specific surface area of the first carbon black may, for example, be 200m$^2$/g or more and 400m$^2$/g or less, 200m$^2$/g or more and 380m$^2$/g or less, 200m$^2$/g or more and 360m$^2$/g or less, 200m$^2$/g or more and 340m$^2$/g or less, 220m$^2$/g or more and 400m$^2$/g or less, 220m$^2$/g or more and 380m$^2$/g or less, 220m$^2$/g or more and 360m$^2$/g or less, 220m$^2$/g or more and 340m$^2$/g or less, 240m$^2$/g or more and 400m$^2$/g or less, 240m$^2$/g or more and 380m$^2$/g or less, 240m$^2$/g or more and 360m$^2$/g or less, 240m$^2$/g or more and 340m$^2$/g or less, 260m$^2$/g or more and 400m$^2$/g or less, 260m$^2$/g or more and 380m$^2$/g or less, 260m$^2$/g or more and 360m$^2$/g or less, 260m$^2$/g or more and 340m$^2$/g or less, 280m$^2$/g or more and 400m$^2$/g or less, 280m$^2$/g or more and 380m$^2$/g or less, 280m$^2$/g or more and 360m$^2$/g or less, or 280m$^2$/g or more and 340m$^2$/g or less.

The BET specific surface area of the second carbon black is 100 m$^2$/g or more, and from the perspective that a thicker conductive path is formed between the positive electrode active materials and higher conductivity is obtained, may be 120 m$^2$/g or more, 140 m$^2$/g or more, 160 m$^2$/g or more, 180 m$^2$/g or more, 200 m$^2$/g or more, or 220 m$^2$/g or more. Further, the BET specific surface area of the second carbon black may, for example, be 400 m$^2$/g or less, and from the perspective of being easily dispersed more uniformly between the positive electrode active materials, may be 390 m$^2$/g or less, 380 m$^2$/g or less, or 370 m$^2$/g or less. That is, the BET specific surface area of the second carbon black may, for example, be 100m$^2$/g or more and 400m$^2$/g or less, 100m$^2$/g or more and 390m$^2$/g or less, 100m$^2$/g or more and 380m$^2$/g or less, 100m$^2$/g or more and 370m$^2$/g or less, 120m$^2$/g or more and 400m$^2$/g or less, 120m$^2$/g or more and 390m$^2$/g or less, 120m$^2$/g or more and 380m$^2$/g or less, 120m$^2$/g or more and 370m$^2$/g or less, 140m$^2$/g or more and 400m$^2$/g or less, 140m$^2$/g or more and 390m$^2$/g or less, 140m$^2$/g or more and 380m$^2$/g or less, 140m$^2$/g or more and 370m$^2$/g or less, 160m$^2$/g or more and 400m$^2$/g or less, 160m$^2$/g or more and 390m$^2$/g or less, 160m$^2$/g or more and 380m$^2$/g or less, 160m$^2$/g or more and 370m$^2$/g or less, 180m$^2$/g or more and 400m$^2$/g or less, 180m$^2$/g or more and 390m$^2$/g or less,

180m$^2$/g or more and 380m$^2$/g or less, 180m$^2$/g or more and 370m$^2$/g or less, 200m$^2$/g or more and 400m$^2$/g or less, 200m$^2$/g or more and 390m$^2$/g or less, 200m$^2$/g or more and 380m$^2$/g or less, 200m$^2$/g or more and 370m$^2$/g or less, 220m$^2$/g or more and 400m$^2$/g or less, 220m$^2$/g or more and 390m$^2$/g or less, 220m$^2$/g or more and 380m$^2$/g or less, or 220m$^2$/g or more and 370m$^2$/g or less.

The crystallite size (Lc) of the first carbon black is 17 Å or less, and may be 16.8 Å or less, 16.6 Å or less, or 16.4 Å or less from the perspective that the particle shape of the carbon black is more likely to be rounded thus reducing interaction between the particles, the carbon black is easily dispersed in the active material more uniformly, conductive paths are formed easily, and it is easy to obtain superior battery properties. Further, the crystallite size (Lc) of the first carbon black may, for example, be 14 Å or more, and may be 14.5 Å or more, 15 Å or more, 15.5 Å or more, or 15.7 Å or more from the perspective that pi-electrons can easily move in a crystalline layer, and thus, it is easy to form a conductive path which carries electrons flowing from the current collector to the active material, and it is easy to obtain superior battery properties. That is, the crystallite size (Lc) of the first carbon black may, for example, be 14 Å or more and 17 Å or less, 14 Å or more and 16.8 Å or less, 14 Å or more and 16.6 Å or less, 14 Å or more and 16.4 Å or less, 14.5 Å or more and 17 Å or less, 14.5 Å or more and 16.8 Å or less, 14.5 Å or more and 16.6 Å or less, 14.5 Å or more and 16.4 Å or less, 15 Å or more and 17 Å or less, 15 Å or more and 16.8 Å or less, 15 Å or more and 16.6 Å or less, 15 Å or more and 16.4 Å or less, 15.5 Å or more and 17 Å or less, 15.5 Å or more and 16.8 Å or less, 15.5 Å or more and 16.6 Å or less, 15.5 Å or more and 16.4 Å or less, 15.7 Å or more and 17 Å or less, 15.7 Å or more and 16.8 Å or less, 15.7 Å or more and 16.6 Å or less, or 15.7 Å or more and 16.4Å or less.

The crystallite size (Lc) of the second carbon black is 19 Å or more, and may be 19.2 Å or more, 19.4 Å or more, or 19.6 Å or more from the perspective that pi-electrons can easily move in a crystalline layer, and thus, it is easy to form a conductive path which carries electrons flowing from the current collector to the active material, and it is easy to obtain superior battery properties. Further, the crystallite size (Lc) of the second carbon black may, for example, be 25 Å or less, and may be 24 Å or less, 23 Å or less, 22 Å or less, or 21 Å or less from the perspective that the particle shape of the carbon black is more likely to be rounded thus reducing interaction between the particles, the carbon black is easily dispersed in the active material more uniformly, conductive paths are formed easily, and it is easy to obtain superior battery properties. That is, the crystallite size (Lc) of the second carbon black may, for example, be 19 Å or more and 25 Å or less, 19 Å or more and 24 Å or less, 19 Å or more and 23 Å or less, 19 Å or more and 22 Å or less, 19 Å or more and 21 Å or less, 19.2 Å or more and 25 Å or less, 19.2 Å or more and 24 Å or less, 19.2 Å or more and 23 Å or less, 19.2 Å or more and 22 Å or less, 19.2 Å or more and 21 Å or less, 19.4 Å or more and 25 Å or less, 19.4 Å or more and 24 Å or less, 19.4 Å or more and 23 Å or less, 19.4 Å or more and 22 Å or less, 19.4 Å or more and 21 Å or less, 19.6 Å or more and 25 Å or less, 19.6 Å or more and 24 Å or less, 19.6 Å or more and 23 Å or less, 19.6 Å or more and 22 Å or less, or 19.6 Å or more and 21 Å or less.

Herein, the crystallite size (Lc) of the carbon black is measured in compliance with JIS R 7651. Note that the crystallite size (Lc) of the carbon black means the crystallite size in the c-axis direction of a carbon black crystalline layer.

The first carbon black may have a DBP absorption value of, for example, 140 mL/100 g or more. The DBP absorption value of the first carbon black may also be 150 mL/100 g or more, 160 mL/100 g or more, or 170 mL/100 g or more. Further, the DBP absorption value of the first carbon black may, for example, be 300 mL/100 g or less, and may be 280 mL/100 g or less, 260 mL/100 g or less, or 240 mL/100 g or less. That is, DBP absorption value of the first carbon black may, for example, be 140 mL/100 g or more and 300 mL/100 g or less, 140 mL/100 g or more and 280 mL/100 g or less, 140 mL/100 g or more and 260 mL/100 g or less, 140 mL/100 g or more and 240 mL/100 g or less, 150 mL/100 g or more and 300 mL/100 g or less, 150 mL/100 g or more and 280 mL/100 g or less, 150 mL/100 g or more and 260 mL/100 g or less, 150 mL/100 g or more and 240 mL/100 g or less, 160 mL/100 g or more and 300 mL/100 g or less, 160 mL/100 g or more and 280 mL/100 g or less, 160 mL/100 g or more and 260 mL/100 g or less, 160 mL/100 g or more and 240 mL/100 g or less, 170 mL/100 g or more and 300 mL/100 g or less, 170 mL/100 g or more and 280 mL/100 g or less, 170 mL/100 g or more and 260 mL/100 g or less, or 170 mL/100 g or more and 240 mL/100 g or less.

The second carbon black may have a DBP absorption value of, for example, 200 mL/100 g or more. The DBP absorption value of the second carbon black may also be 220 mL/100 g or more, 240 mL/100 g or more, or 260 mL/100 g or more. Further, the DBP absorption value of the second carbon black may, for example, be 450 mL/100 g or less, and may be 420 mL/100 g or less, 400 mL/100 g or less, or 380 mL/100 g or less. That is, DBP absorption value of the second carbon black may, for example, be 200 mL/100 g or more and 450 mL/100 g or less, 200 mL/100 g or more and 420 mL/100 g or less, 200 mL/100 g or more and 400 mL/100 g or less, 200 mL/100 g or more and 380 mL/100 g or less, 220 mL/100 g or more and 450 mL/100 g or less, 220 mL/100 g or more and 420 mL/100 g or less, 220 mL/100 g or more and 400 mL/100 g or less, 220 mL/100 g or more and 380 mL/100 g or less, 240 mL/100 g or more and 450 mL/100 g or less, 240 mL/100 g or more and 420 mL/100 g or less, 240 mL/100 g or more and 400 mL/100 g or less, 240m L/100 g or more and 380 mL/100 g or less, 260 mL/100 g or more and 450 mL/100 g or less, 260 mL/100 g or more and 420 mL/100 g or less, 260 mL/100 g or more and 400 mL/100 g or less, or 260 mL/100 g or more and 380 mL/100 g or less.

The DBP absorption value herein is an indicator for evaluating the capability of absorbing dibutyl phthalate (DBP) in voids created by the particle surfaces and structures of the carbon black. Herein, the DBP absorption value indicates a value obtained by using formula (a) described below to convert a value measured by the method described in JIS K 6221 to a value measured by the method described in JIS K 6217-4: 2008.

$$\text{DBP absorption value} = (A - 10.974)/0.7833 \ldots(a)$$

[wherein A indicates a DBP absorption value measured by the method described in JIS K 6221]

The first carbon black may have an average primary particle diameter of, for example, 5 nm or more. From the perspective of reducing interaction between the particles of the carbon black and easily obtaining better dispersibility, the average primary particle diameter of the first carbon black may also be 7 nm or more, 9 nm or more, or 11 nm or more. Further, the average primary particle diameter of the first carbon black may, for example, be 21 nm or less. From the perspective of increasing the number of conductive paths to the positive electrode active material and easily obtaining higher battery properties, the average primary particle diameter of the first carbon black may also be 19 nm or less, 18 nm or less, or 17 nm or less. That is, the average primary particle diameter of the first carbon black may, for example, be 5 nm or more and 21 nm or less, 5 nm or more and 19 nm or less, 5 nm or more and 18 nm or less, 5 nm or more and 17 nm or less, 7 nm or more and 21 nm or less, 7 nm or more and 19 nm or less, 7 nm or more and 18 nm or less, 7 nm or more and 17 nm or less, 9 nm or more and 21 nm or less, 9 nm or more and 19 nm or less, 9 nm or more and 18 nm or less, 9 nm or more and 17 nm or less, 11 nm or more and 21 nm or less, 11 nm or more and 19 nm or less, 11 nm or more and 18 nm or less, or 11 nm or more and 17 nm or less.

The second carbon black may have an average primary particle diameter of, for example, 10 nm or more. From the perspective of reducing interaction between the particles of the carbon black and easily obtaining better dispersibility, the average primary particle diameter of the second carbon black may also be 12 nm or more, 14 nm or more, or 16 nm or more. Further, the average primary particle diameter of the second carbon black may, for example, be 30 nm or less. From the perspective of increasing the number of conductive paths to the positive electrode active material and easily obtaining higher battery properties, the average primary particle diameter of the second carbon black may also be 27 nm or less, 24 nm or less, or 22 nm or less. That is, the average primary particle diameter of the second carbon black may, for example, be 10 nm or more and 30 nm or less, 10 nm or more and 27 nm or less, 10 nm or more and 24 nm or less, 10 nm or more and 22 nm or less, 12 nm or more and 30 nm or less, 12 nm or more and 27 nm or less, 12 nm or more and 24 nm or less, 12 nm or more and 22 nm or less, 14 nm or more and 30 nm or less, 14 nm or more and 27 nm or less, 14 nm or more and 24 nm or less, 14 nm or more and 22 nm or less, 16 nm or more and 30 nm or less, 16 nm or more and 27 nm or less, 16 nm or more and 24 nm or less, or 16 nm or more and 22 nm or less.

Herein, the average primary particle diameter of the carbon black can be determined by measuring 100 or more carbon black primary particle diameters selected indiscriminately from an image of a transmission electron microscope (TEM) with a magnification of 50,000 and calculating the average value thereof. Carbon black primary particles have a small aspect ratio and a shape close to a true sphere, but are not completely true spheres. Here, in the present embodiment, the largest line segment among line segments connecting two points on the circumference of a primary particle in a TEM image is used as the primary particle diameter of the carbon black.

The first carbon black and the second carbon black may, for example, have an ash content of 0.1 mass% or less, and said ash content may also be 0.05 mass% or less or 0.02 mass% or less. The ash content can be reduced by, for example, classifying the carbon black with a device such as a dry cyclone, or the like.

Herein, the ash content of the carbon black is measured in compliance with JIS K 1469: 2003.

The first carbon black and the second carbon black may have an iron content of, for example, 0.1 mass% or less, and said iron content may also be 0.02 mass% or less or 0.005 mass% or less. The iron content can be reduced by, for example, bringing the carbon black into contact with a magnet.

The iron content of the carbon black can be measured, in compliance with JIS K 0116: 2014, by performing an acid digestion pretreatment and then measuring by radio-frequency inductively coupled plasma mass spectrometry. Specifically, measurement can be performed by the method described below. First, 1 g of carbon black is weighed precisely in a quartz beaker and heated at 800°C for three hours in an ambient air atmosphere using an electric furnace. Next, 10 mL of a mixed acid (hydrochloric acid 70 mass%, nitric acid 30 mass%) and 10 mL or more of ultrapure water are added to the residue and dissolved by being heated at 200°C for one hour on a hot plate. After cooling, ultrapure water is used to dilute/adjust the foregoing to 25 mL and the obtained solution is measured by a radio-frequency inductively coupled plasma mass spectrometer (Agilent 8800, manufactured by Agilent Technologies, Inc.).

With a small ash component and a low iron content, it is possible to significantly suppress foreign matter such as ceramics, metals, and the like, from being incorporated during a kneading process due to device damage, etc. Further, it is also possible to suppress decreases in conductivity within electrodes due to ash or foreign matter with insulating properties, etc., being incorporated therein. Due thereto, carbon black with a small ash component and a low iron content can be preferably used in lithium-ion secondary batteries which demand a high level of safety.

The method for producing the first carbon black and the second carbon black is not particularly limited. For example, carbon black can be produced by supplying a raw material such as a hydrocarbon, etc., from a nozzle installed at an upstream section of a reactor, and carrying out a thermal decomposition reaction and/or a combustion reaction. The carbon black can be collected from a bag filter directly coupled to a downstream section of the reactor.

The raw material used is not particularly limited, and gaseous hydrocarbons such as acetylene, methane, ethane, propane, ethylene, propylene, and butadiene, etc., and oil-form hydrocarbons such as toluene, benzene, xylene, gasoline, kerosene, light oil, and heavy oil, etc., can be used. Among the foregoing, it is preferable to use acetylene which has a small amount of impurities. Acetylene has greater thermal decomposition than other raw materials and can make the temperature inside the reactor higher, and therefore, nucleating of the carbon black is superior than particle growth due to an addition reaction, and thus, the primary particle diameter of the carbon black can be made smaller.

Further, besides raw materials serving as a carbon source, it is preferable for oxygen, carbon dioxide, hydrogen, nitrogen, steam, etc., to be supplied to the reactor. The foregoing gases other than the raw materials promote gas stirring inside the reactor and increase the frequency at which primary particles of carbon black generated from the raw materials collide and fuse with one another, and therefore, by using a gas other than the raw materials, primary aggregates of the carbon black tend to develop easily. Using oxygen as the gas other than the raw materials is preferred. When oxygen is used, a portion of the raw materials combusts and the temperature inside the reactor becomes high, and thus, it tends to be easy to obtain carbon black having a small particle diameter and a high specific surface area. It is also possible to use a plurality of gases as the gas other than the raw materials. The gas other than the raw materials is preferably supplied at an upstream section of the reactor and is preferably supplied from a different nozzle from the raw material. Doing so allows stirring of the raw materials supplied in the same manner from an upstream section to be stirred efficiently and primary aggregates tend to develop easily.

In conventional carbon black production, there are cases in which a cooling medium such as water, etc., is fed from a downstream section of the reactor in order to stop a combustion reaction or the thermal combustion of the raw materials but no effects of developing primary aggregates are seen. Meanwhile, there is a risk of a significant variation in properties due to a sudden temperature change, and therefore, in the present embodiment, it is preferable that a cooling medium is not fed in from a downstream section of the reactor.

The first carbon black and the second carbon black are not limited to carbon blacks obtained directly via production using a reactor as described above. The first carbon black and the second carbon black may, for example, be obtained by crushing the obtained carbon described above or mixing with a carbon black produced under different conditions.

In the present embodiment, the first carbon black and the second carbon black function as conductive materials. The coating liquid for forming a positive electrode according to the present embodiment may further contain another conductive material besides the first carbon black and the second carbon black. Examples of other conductive materials include carbon materials such as a carbon black other than those described above, carbon nanotubes, etc.

In the present embodiment, with respect to 100 parts by mass of the total of the first carbon black and the second carbon black, the content of the other conductive material (for example, another carbon material) may, for example, be 30 parts by mass or less, 20 parts by mass or less, 10 parts by mass or less, 5 parts by mass or less, or 1 part by mass or less, and may be 0 parts by mass.

A ratio $C_2/C_1$ of a content $C_2$ of the second carbon black with respect to a content $C_1$ of the first carbon black in the coating liquid for forming a positive electrode is 0.1 or more and from the perspective that interaction between particles of the carbon black is reduced, the carbon black is easily dispersed in the active material more uniformly, conductive paths are formed easily, and it is easy to obtain superior battery properties, the ratio $C_2/C_1$ may be 0.13 or more, 0.15 or more, 0.17 or more, or 0.2 or more. Further, the ratio $C_2/C_1$ is 0.45 or less, and from the perspective that pi-electrons can easily move in a crystalline layer, and thus, it is easy to form a conductive path which carries electrons flowing from the current collector to the active material, and it is easy to obtain superior battery properties, the ratio $C_2/C_1$ may be 0.42 or less, 0.4 or less, 0.38 or less, or 0.35 or less. That is, the ratio $C_2/C_1$ may, for example, be 0.1 or more and 0.45 or less, 0.1 or more and 0.42 or less, 0.1 or more and 0.4 or less, 0.1 or more and 0.38 or less, 0.1 or more and 0.35 or less, 0.13 or more and 0.45 or less, 0.13 or more and 0.42 or less, 0.13 or more and 0.4 or less, 0.13 or more and 0.38 or less, 0.13 or more and 0.35 or less, 0.15 or more and 0.45 or less, 0.15 or more and 0.42 or less, 0.15 or more and 0.4 or less, 0.15 or more and 0.38 or less, 0.15 or more and 0.35 or less, 0.17 or more and 0.45 or less, 0.17 or more and 0.42 or less, 0.17 or more and 0.4 or less, 0.17 or more and 0.38 or less, 0.17 or more and 0.35 or less, 0.2 or more and 0.45 or less, 0.2 or more and 0.42 or less, 0.2 or more and 0.4 or less, 0.2 or more and 0.38 or less, or 0.2 or more and 0.35 or less.

With respect to 100 parts by mass of the active material, the total content $(C_1+C_2)$ of the first carbon black and the second carbon black in the coating liquid for forming a positive electrode may, for example, be 0.5 parts by mass or more, and from the perspective of increasing the number of conductive paths to the positive electrode active material and easily obtaining higher battery properties, said total content may also be 0.75 parts by mass or more, 1 part by mass or more, or 1.5 parts by mass or more. Further, with respect to 100 parts by mass of the active material, the content $(C_1+C_2)$ of the total of the first carbon black and the second carbon black in the coating liquid for forming a positive electrode may, for example, be 4.0 parts by mass or less, and from the perspective that interaction between particles of the carbon black is reduced, the carbon black is easily dispersed in the active material more uniformly, conductive paths are formed easily, and it is easy to obtain superior battery properties, said content may also be 3.5 parts by mass or less, 3.0 parts by mass or less, or 2.5 parts by mass or less. That is, with respect to 100 parts by mass of the active material, the total content $(C_1+C_2)$ described above

may, for example, be 0.5 parts by mass or more and 4.0 parts by mass or less, 0.5 parts by mass or more and 3.5 parts by mass or less, 0.5 parts by mass or more and 3.0 parts by mass or less, 0.5 parts by mass or more and 2.5 parts by mass or less, 0.75 parts by mass or more and 4.0 parts by mass or less, 0.75 parts by mass or more and 3.5 parts by mass or less, 0.75 parts by mass or more and 3.0 parts by mass or less, 0.75 parts by mass or more and 2.5 parts by mass or less, 1 part by mass or more and 4.0 parts by mass or less, 1 part by mass or more and 3.5 parts by mass or less, 1 part by mass or more and 3.0 parts by mass or less, 1 part by mass or more and 2.5 parts by mass or less, 1.5 parts by mass or more and 4.0 parts by mass or less, 1.5 parts by mass or more and 3.5 parts by mass or less, 1.5 parts by mass or more and 3.0 parts by mass or less, or 1.5 parts by mass or more and 2.5 parts by mass or less.

The active material should be a material which allows cations to be reversibly occluded and released. The active material can also be referred to as a positive electrode active material.

The active material is not particularly limited, and, for example, it is possible to use, without any particular limitation, publicly-known active materials that are used in lithium-ion secondary batteries. Examples of active materials include lithium cobalt oxide, lithium nickel oxide, lithium manganese oxide, lithium nickel manganese cobalt oxide, and lithium iron phosphate, etc.

The active material may, for example, be a lithium-containing composite oxide including manganese having a volume resistivity of $1 \times 10^4$ $\Omega \cdot$cm or more or a lithium-containing polyanion compound. Examples of a lithium-containing composite oxide that includes manganese include: lithium manganese oxides such as $LiMnO_2$, $LiMnO_3$, $LiMn_2O_3$, and $Li_{1+x}Mn_{2-x}O_4$ (wherein x=0-0.33), etc.; and composite oxides that include one or more transition metal elements such as $LiMn_xNi_yCo_zO_2$ (wherein x+y+z=1, $0 \leq y<1, 0 \leq z<1$, and $0 \leq x<1$), $Li_{1+x}Mn_{2-x-y}M_yO_4$ (wherein x=0-0.33, y=0-1.0, and 2-y-x>0), $LiMn_{2-x}M_xO_2$ (wherein x=0.01-0.1), and $Li_2Mn_3MO_8$, etc. Examples of lithium-containing polyanion compounds include polyanion compounds such as $LiFePO_4$, $LiMnPO_4$, and $Li_2MPO_4F$ (wherein M is at least one metal selected from Co, Ni, Fe, Cr, and Zn), etc. In the composition formulas, M is at least one element selected from the group consisting of Fe, Co, Ni, Al, Cu, Mg, Cr, Zn, and Ta.

From the perspective that there is sufficiently excellent binding between the conductive material and the binding material and that battery properties are easily further improved, the average particle diameter ($D_{50}$) of the active material may, for example, be 20 $\mu$m or less or 10 $\mu$m or less. From the perspective that battery properties are easily further improved, the average particle diameter ($D_{50}$) of the active material may, for example, be 200 nm or more or 1 $\mu$m or more. The average particle diameter (D50) of the active material can be measured by a laser light scattering method.

The content of the active material in the coating liquid for forming a positive electrode may, for example, be 90 mass% or more based on the total mass of the solid content in the coating liquid for forming a positive electrode. From the perspective of further improving discharge rate properties, the content of the active material in the coating liquid for forming a positive electrode may also be 91 mass% or more, 92 mass% or more, or 93 mass% or more. Further, the content of the active material in the coating liquid for forming a positive electrode may, for example, be 99 mass% or less based on the total mass of the solid content in the coating liquid for forming a positive electrode. From the perspective of further reducing internal resistance, the content of the active material in the coating liquid for forming a positive electrode may also be 98 mass% or less, 97 mass% or less, or 96 mass% or less. That is, based on the total mass of the solid content in the coating liquid for forming a positive electrode, the content of the active material in the coating liquid for forming a positive electrode may, for example, be 90 mass% or more and 99 mass% or less, 90 mass% or more and 98 mass% or less, 90 mass% or more and 97 mass% or less, 90 mass% or more and 96 mass% or less, 91 mass% or more and 99 mass% or less, 91 mass% or more and 98 mass% or less, 91 mass% or more and 97 mass% or less, 91 mass% or more and 96 mass% or less, 92 mass% or more and 99 mass% or less, 92 mass% or more and 98 mass% or less, 92 mass% or more and 97 mass% or less, 92 mass% or more and 96 mass% or less, 93 mass% or more and 99 mass% or less, 93 mass% or more and 98 mass% or less, 93 mass% or more and 97 mass% or less, or 93 mass% or more and 96 mass% or less.

Examples of the liquid medium include water, N-methyl-2-pyrrolidone, cyclohexane, methyl ethyl ketone, and methyl isobutyl ketone, etc. Among the foregoing, from the perspective of dispersibility, N-methyl-2-pyrrolidone is preferred.

The content of the liquid medium is not particularly limited and may, for example, be adjusted, as appropriate, so that the coating liquid for forming a positive electrode has solid content concentration in the preferred range described later.

The coating liquid for forming a positive electrode may further contain a binding material.

Examples of binding materials include polyvinylidene fluoride, polytetrafluoroethylene, styrene-butadiene copolymers, and (meth)acrylic acid ester copolymers, etc. The polymeric structure of the binding material may, for example, be a random copolymer, an alternating copolymer, a grafted copolymer, or a block copolymer, etc. From the perspective that voltage resistance is excellent, polyvinylidene fluoride is preferred as the binding material.

The content of the binding material in the coating liquid for forming a positive electrode may, for example, be 0.5 parts by mass or more with respect to 100 parts by mass of the active material, and from the perspective that adhesiveness of the positive electrode plate increases and higher battery properties are easily obtained, said content may also be 0.8 parts by mass or more, 1.0 part by mass or more, or 1.5 parts by mass or more. Further, the content of the binding material in the coating liquid for forming a positive electrode may, for example, be 5.0 parts by mass or less with respect to 100 parts by mass of the active material. From the perspective that a resistance component derived from the binding material decreases and higher battery properties are easily obtained, the content of the binding material in the coating liquid for forming a positive electrode may also be 4.5 parts by mass or less, 4.0 parts by mass or less, or 3.5 parts by mass or less. That is, with respect to 100 parts by mass of the active material, the content of the binding material in the coating liquid for forming a positive electrode may, for example, be 0.5 parts by mass or more and 5.0 parts by mass or less, 0.5 parts by mass or more and 4.5 parts by mass or less, 0.5 parts by mass or more and 4.0 parts by mass or less, 0.5 parts by mass or more and 3.5 parts by mass or less, 0.8 parts by mass or more and 5.0 parts by mass or less, 0.8 parts by mass or more and 4.5 parts by mass or less, 0.8 parts by mass or more and 4.0 parts by mass or less, 0.8 parts by mass or more and 3.5 parts by mass or less, 1.0 part by mass or more and 5.0 parts by mass or less, 1.0 part by mass or more and 4.5 parts by mass or less, 1.0 part by mass or more and 4.0 parts by mass or less, 1.0 part by mass or more and 3.5 parts by mass or less, 1.5 parts by mass or more and 5.0 parts by mass or less, 1.5 parts by mass or more and 4.5 parts by mass or less, 1.5 parts by mass or more and 4.0 parts by mass or less, or 1.5 parts by mass or more and 3.5 parts by mass or less.

The coating liquid for forming a positive electrode may further contain a dispersing agent for carbon black. The dispersing agent should be a component that has a function of aiding dispersion of carbon black in a liquid medium.

Examples of dispersing agents include high-molecular dispersing agents and low-molecular dispersing agents, etc. From the perspective of long-term dispersion stability of the conductive material (carbon black), high-molecular dispersing agents are preferred.

The dispersing agent may, for example, be a dispersing agent selected from the group consisting of polyvinyl alcohol, polyvinylpyrrolidone, polyvinyl butyral, carboxymethylcellulose and salts thereof, polyvinyl acetal, polyvinyl acetate, polyvinylamine, and polyvinyl formal.

With the total $(C_1+C_2)$ of the first carbon black and the second carbon black deemed to be 100 parts by mass, the content of the dispersing agent in the coating liquid for forming a positive electrode may, for example, be 5 parts by mass or more. From the perspective that interaction between particles of the carbon black is reduced, the carbon black is easily dispersed in the active material more uniformly, conductive paths are formed easily, and superior battery properties are easily obtained, the content of the dispersing agent in the coating liquid for forming a positive electrode may also be 6 parts by mass or more, 8 parts by mass or more, or 10 parts by mass or more. Further, with the total $(C_1+C_2)$ of the first carbon black and the second carbon black deemed to be 100 parts by mass, the content of the dispersing agent in the coating liquid for forming a positive electrode may, for example, be 50 parts by mass or less. From the perspective of reducing a resistance component derived from the dispersing agent and easily obtaining higher battery properties, the content of the dispersing agent in the coating liquid for forming a positive electrode may also be 45 parts by mass or less, 40 parts by mass or less, or 35 parts by mass or less. That is, with the total $(C_1+C_2)$ of the first carbon black and the second carbon black deemed to be 100 parts by mass, the content of the dispersing agent in the coating liquid for forming a positive electrode may, for example, be 5 parts by mass or more and 50 parts by mass or less, 5 parts by mass or more and 45 parts by mass or less, 5 parts by mass or more and 40 parts by mass or less, 5 parts by mass or more and 35 parts by mass or less, 6 parts by mass or more and 50 parts by mass or less, 6 parts by mass or more and 45 parts by mass or less, 6 parts by mass or more and 40 parts by mass or less, 6 parts by mass or more and 35 parts by mass or less, 8 parts by mass or more and 50 parts by mass or less, 8 parts by mass or more and 45 parts by mass or less, 8 parts by mass or more and 40 parts by mass or less, 8 parts by mass or more and 35 parts by mass or less, 10 parts by mass or more and 50 parts by mass or less, 10 parts by mass or more and 45 parts by mass or less, 10 parts by mass or more and 40 parts by mass or less, or 10 parts by mass or more and 35 parts by mass or less.

The solid content concentration in the coating liquid for forming a positive electrode is not particularly limited, and may, for example, be 50 mass% or more. From the perspective that it is possible to shorten the time for drying the liquid medium when producing a positive electrode and from the perspective that it is possible to further suppress migration of the conductive material when drying the liquid medium, the solid content concentration in the coating liquid for forming a positive electrode may also be 55 mass% or more, 60 mass% or more, or 65 mass% or more. Further, the solid content concentration in the coating liquid for forming a positive electrode is not particularly limited and may, for example, be 90 mass% or less. From the perspective that a coating film can be made smoother when a positive electrode is produced, and from the perspective that variation in the internal resistance of a battery can be further reduced, the solid content concentration in the coating liquid for forming a positive electrode may also be 85 mass% or less, 80 mass% or less, or 75 mass% or less. That is, the solid content concentration in the coating liquid for forming a positive electrode may, for example, be 50 mass% or more and 90 mass% or less, 50 mass% or more and 85 mass% or less, 50 mass% or more and 80 mass% or less, 50 mass% or more and 75 mass% or less, 55 mass% or more and 90 mass% or less, 55 mass% or more and 85 mass% or less, 55 mass% or more and 80 mass% or less, 55 mass% or more and 75 mass% or less, 60 mass% or more and 90 mass% or less, 60 mass% or more and 85 mass% or less, 60 mass% or more and 80 mass% or less, 60 mass% or more and 75 mass% or less, 65 mass% or more and 90 mass% or less, 65 mass% or more and 85 mass% or less, 65 mass% or more and 80 mass% or less, or 65 mass% or more and 75 mass% or less.

The method for producing the coating liquid for forming a positive electrode is not particularly limited.

The coating liquid for forming a positive electrode may, for example, be produced by a method including: a slurry preparation step for preparing a first slurry containing a first carbon black and a first liquid medium, and a second slurry containing a second carbon black and a second liquid medium; and a mixing step for mixing the first slurry, the second slurry, and an active material to obtain a coating liquid for forming a positive electrode. Note that by providing a slurry preparation step in which the first slurry and the second slurry are prepared separately, it is easier to obtain a battery having small internal resistance and excellent discharge rate properties than in a case in which a mixed slurry is prepared by mixing a first carbon black powder and a second carbon black powder.

The first slurry may be a mixture of the first carbon black and the first liquid medium. That is, the production method described above may further include a step for forming the first slurry by mixing the first carbon black and the first liquid medium.

Examples of the first liquid medium include the same liquid media as those in the composition for forming a positive electrode described above.

The content of the first liquid medium in the first slurry is not particularly limited and may be adjusted, as appropriate, so that the solid content concentration in the first slurry is within the ranges described later.

The first slurry may further contain a dispersing agent for carbon black. Examples of the dispersing agent include the same dispersing agents as those in the composition for forming a positive electrode described above.

The content of the dispersing agent in the first slurry may, for example, be 5 parts by mass or more with respect to 100 parts by mass of the first carbon black. From the perspective that dispersibility of the carbon black in the slurry improves and a slurry with a low viscosity is easily obtained, the content of the dispersing agent in the first slurry may also be 6 parts by mass or more, 8 parts by mass or more, or 10 parts by mass or more. Further, the content of the dispersing agent in the first slurry may, for example, be 25 parts by mass or less with respect to 100 parts by mass of the first carbon black. From the perspective that a resistance component derived from the dispersing agent is reduced and higher battery properties are easily obtained, the content of the dispersing agent in the first slurry may also be 24 parts by mass or less, 23 parts by mass or less, or 22 parts by mass or less. That is, with respect to 100 parts by mass of the first carbon black, the content of the dispersing agent in the first slurry may, for example, be 5 parts by mass or more and 25 parts by mass or less, 5 parts by mass or more and 24 parts by mass or less, 5 parts by mass or more and 23 parts by mass or less, 5 parts by mass or more and 22 parts by mass or less, 6 parts by mass or more and 25 parts by mass or less, 6 parts by mass or more and 24 parts by mass or less, 6 parts by mass or more and 23 parts by mass or less, 6 parts by mass or more and 22 parts by mass or less, 8 parts by mass or more and 25 parts by mass or less, 8 parts by mass or more and 24 parts by mass or less, 8 parts by mass or more and 23 parts by mass or less, 8 parts by mass or more and 22 parts by mass or less, 10 parts by mass or more and 25 parts by mass or less, 10 parts by mass or more and 24 parts by mass or less, 10 parts by mass or more and 23 parts by mass or less, or 10 parts by mass or more and 22 parts by mass or less.

The solid content concentration in the first slurry is not particularly limited and may, for example, be 5 mass% or more, and may also be 7 mass% or more or 10 mass% or more. Further, the solid content concentration in the first slurry is not particularly limited and may, for example, be 25 mass% or less, and may also be 20 mass% or less or 15 mass% or less. That is, the solid content concentration in the first slurry may, for example, be 5 mass% or more and 25 mass% or less, 5 mass% or more and 20 mass% or less, 5 mass% or more and 15 mass% or less, 7 mass% or more and 25 mass% or less, 7 mass% or more and 20 mass% or less, 7 mass% or more and 15 mass% or less, 10 mass% or more and 25 mass% or less, 10 mass% or more and 20 mass% or less, or 10 mass% or more and 15 mass% or less.

The second slurry may be a mixture of the second carbon black and the second liquid medium. That is, the production method described above may further include a step for forming the second slurry by mixing the second carbon black and the second liquid medium.

Examples of the second liquid medium include the same liquid media as those in the composition for forming a positive electrode described above.

The content of the second liquid medium in the second slurry is not particularly limited and may be adjusted, as appropriate, so that the solid content concentration in the second slurry is within the ranges described later.

The second slurry may further contain a dispersing agent for carbon black. Examples of the dispersing agent include the same dispersing agents as those in the composition for forming a positive electrode described above.

The content of the dispersing agent in the second slurry may, for example, be 5 parts by mass or more with respect to 100 parts by mass of the second carbon black. From the perspective that dispersibility of the carbon black in the slurry improves and a slurry with a low viscosity is easily obtained, the content of the dispersing agent in the second slurry may also be 6 parts by mass or more, 8 parts by mass or more, or 10 parts by mass or more. Further, the content of the dispersing agent in the second slurry may, for example, be 25 parts by mass or less with respect to 100 parts by mass of the second carbon black. From the perspective that a resistance component derived from the dispersing agent is reduced and higher battery properties are easily obtained, the content of the dispersing agent in the second slurry may also be 24 parts by mass or less, 23 parts by mass or less, or 22 parts by mass or less. That is, with respect to 100 parts by mass of the second carbon black, the content of the dispersing agent in the second slurry may, for example, be 5 parts by mass or more and 25 parts by mass or less, 5 parts by mass or more and 24 parts by mass or less, 5 parts by mass or more and 23 parts by mass or less, 5 parts by mass or more and 22 parts by mass or less, 6 parts by mass or more and 25 parts by mass or less, 6 parts by mass or more and 24 parts by mass or less, 6 parts by mass or more and 23 parts by mass or less, 6 parts by mass or more and 22 parts by mass or less, 8 parts by mass or more and 25 parts by mass or less, 8 parts by mass or more and 24 parts by mass or less, 8 parts by mass or more and 23 parts by mass or less, 8 parts by mass or more and 22 parts by mass or less, 10 parts by mass or more and 25 parts by mass or less, 10 parts by mass or more and 24 parts by mass or less, 10 parts by mass or more and 23 parts by mass or less, or 10 parts by mass or more and 22 parts by mass or less.

The solid content concentration in the second slurry is not particularly limited and may, for example, be 5 mass% or more, and may also be 7 mass% or more or 10 mass% or more. Further, the solid content concentration in the second slurry is not particularly limited and may, for example, be 30 mass% or less, and may also be 25 mass% or less or 20 mass% or less. That is, the solid content concentration in the second slurry may, for example, be 5 mass% or more and 30 mass% or less, 5 mass% or more and 25 mass% or less, 5 mass% or more and 20 mass% or less, 7 mass% or more and 30 mass% or less, 7 mass% or more and 25 mass% or less, 7 mass% or more and 20 mass% or less, 10 mass% or more and 30 mass% or less, 10 mass% or more and 25 mass% or less, or 10 mass% or more and 20 mass% or less.

The method for mixing the first slurry, the second slurry, and the active material is not particularly limited, and may be performed by publicly-known method (for example, stirring and mixing by using a ball mill, a sand mill, a twin-screw kneader, a planetary centrifugal mixer, a planetary mixer, a disperser mixer, or the like). The first slurry, the second slurry, and the active material may be mixed at the same time or may be mixed sequentially.

<Positive electrode composition>

A positive electrode composition according to the present embodiment contains a first carbon black, a second carbon black, and an active material. The positive electrode composition may further contain a binding material. Further, the positive electrode composition may further contain a dispersing agent for carbon black.

The positive electrode composition may be a composition containing a solid content of a coating liquid for forming a positive electrode, and may be a composition obtained by removing at least a portion of a liquid medium from a coating liquid for forming a positive electrode. The content ratios of each component in the positive electrode composition may be the same as the content ratios of each component in the coating liquid for forming a positive electrode.

<Positive electrode>

A positive electrode according to the present embodiment includes: a composite layer comprising a positive electrode composition; and a current collector.

The positive electrode according to the present embodiment may, for example, be produced by a production method including a positive electrode formation step in which a current collector is coated with the coating liquid for forming a positive electrode described above to form a composite layer comprising the positive electrode composition on the current collector.

The current collector is not particularly limited and publicly-known current collectors may be used without any particular restrictions. For example, a metal foil (a metal such as gold, silver, copper, platinum, aluminum, iron, nickel, chromium, manganese, lead, tungsten, and titanium, etc., and an alloy in which any one of the foregoing metals is used as a main component) may be used as a current collector. The current collector is generally provided in the form of a foil but is not limited thereto and perforated foil-type and mesh-type current collectors can also be used.

The method for coating the current collector with the coating liquid for forming a positive electrode is not particularly limited and may, for example, be a method such as die coating, dip coating, roll coating, doctor blade coating, knife coating, spray coating, gravure coating, screen printing, or electrostatic painting, etc.

The amount of the coating liquid for forming positive electrode coated is not particularly limited and may be adjusted, as appropriate, so that the thickness of a composite layer is within a desired range.

The composite layer may be formed by removing at least a portion of the liquid medium from a coating film of the coating liquid for forming a positive electrode formed on the current collector. The method for removing the liquid medium is not particularly limited. Examples of methods in which at least a portion of a liquid medium is removed by being vaporized by heating and/or decompression include a method in which the coating film is left to dry and methods using an air blower, a warm air dryer, an infrared heater, a far-infrared heater, etc.

The method for producing a positive electrode may further include a pressurization step for pressurizing, in the stacking direction, the current collector and the composite layer formed in positive electrode formation step. Due to the pressurization step, the composite layer and the current collector can be closely adhered to one another.

The pressurization method in the pressurization step is not particularly limited and may, for example, be a method such as roll pressing, mold pressing, calendar pressing, etc.

The thickness of the composite layer in the positive electrode is not particularly limited and may, for example, be 50 $\mu$m or more. From the perspective of raising battery capacity, the thickness of the composite layer in the positive electrode is preferably 55 $\mu$m or more, more preferably 60 $\mu$m or more, and may also be 65 $\mu$m or more or 70 $\mu$m or more.

Further, the thickness of the composite layer in the positive electrode may, for example, be 150 μm or less. From the perspective of further increasing discharge rate properties, the thickness of the composite layer in the positive electrode is preferably 140 μm or less, more preferably 130 μm or less, and may also be 120 μm or less or 110 μm or less. That is, the thickness of the composite layer in the positive electrode may, for example, be 50 μm or more and 150 μm or less, 50 μm or more and 140 μm or less, 50 μm or more and 130 μm or less, 50 μm or more and 120 μm or less, 50 μm or more and 110 μm or less, 55 μm or more and 150 μm or less, 55 μm or more and 140 μm or less, 55 μm or more and 130 μm or less, 55 μm or more and 120 μm or less, 55 μm or more and 110 μm or less, 60 μm or more and 150 μm or less, 60 μm or more and 140 μm or less, 60 μm or more and 130 μm or less, 60 μm or more and 120 μm or less, 60 μm or more and 110 μm or less, 65 μm or more and 150 μm or less, 65 μm or more and 140 μm or less, 65 μm or more and 130 μm or less, 65 μm or more and 120 μm or less, 65 μm or more and 110 μm or less, 70 μm or more and 150 μm or less, 70 μm or more and 140 μm or less, 70 μm or more and 130 μm or less, 70 μm or more and 120 μm or less, or 70 μm or more and 110 μm or less.

The positive electrode according to the present embodiment can preferably be used as a positive electrode of a battery, in particular, a secondary battery (lithium-ion secondary battery).

<Battery>

A battery (preferably a secondary battery and more preferably a lithium-ion secondary battery) according to the present embodiment is provided with a positive electrode including: a composite layer comprising a positive electrode composition; and a current collector. The positive electrode may be produced by the production method described above.

Other than the positive electrode, the configuration of the battery according to the present embodiment may be the same configuration as that of a publicly-known battery. Other than using the positive electrode described above, the method for producing the battery according to the present embodiment is not particularly limited and may be the same method as a conventional and well-known battery production method.

The battery according to the present embodiment may, for example, be provided with a positive electrode, a negative electrode, and a separator.

The separator is not particularly limited, and it is possible to use, without any particular limitations, a publicly-known separator for a lithium-ion secondary battery. Examples of separators include synthetic resins such as polyethylene and polypropylene, etc. The separator is preferably a porous film since electrolytic solution retention is good.

The battery according to the present embodiment may be provided with an electrode group in which the positive electrode and the negative electrode are stacked or wound with the separator interposed therebetween.

In the battery according to the present embodiment, the positive electrode, the negative electrode, and the separator may be immersed in an electrolytic solution.

The electrolytic solution is not particularly limited and may, for example, be a non-aqueous electrolytic solution including a lithium salt. Examples of a non-aqueous solvent in a non-aqueous electrolytic solution including a lithium ion include ethylene carbonate, propylene carbonate, diethyl carbonate, dimethyl carbonate, and ethyl methyl carbonate, etc. Further, examples of lithium salts which can dissolve in a non-aqueous solvent include lithium hexafluorophosphate, lithium tetrafluoroborate, and lithium trifluoromethanesulfonate, etc. In the battery according to the present embodiment, an ion-conducting polymer, etc., may be used as an electrolyte.

In the same manner as negative electrodes used in general lithium-ion secondary batteries, the negative electrode of the battery according to the present embodiment may be provided with: a negative electrode mixture layer formed by coating a negative electrode current collector with a negative electrode mixture including a negative electrode active material and a binding material; and a negative electrode current collector.

Uses of the battery in the present embodiment are not particularly limited. For example, the battery can be used in portable AV devices such as digital cameras, video cameras, portable audio players, and portable liquid crystal televisions, etc., portable information terminals such as laptop computers, smart phones, and mobile PCs, etc., and a wide range of other fields such as portable game devices, electric tools, electric bicycles, hybrid electric vehicles, electric vehicles, and power storage systems, etc.

A preferred embodiment of the present disclosure was described above, but the present disclosure is not limited to the embodiment described above.

EXAMPLES

The present disclosure is explained in more detail below using examples, but the present disclosure is not limited to the following examples.

<Production example A-1: Production of carbon black A-1>

Carbon black was produced by supplying the raw materials acetylene, toluene, and oxygen at, respectively, 12

Nm$^3$/h, 32 kg/h, and 23 Nm$^3$/h from a nozzle installed at an upstream section of a carbon black reactor (reactor length 6 m, reactor diameter 0.65 m). The carbon black was collected using a bag filter installed at a downstream section of the reactor. Thereafter, the carbon black passed through a dry cyclone device, passed a magnet for iron removal, and was recovered in a tank. Note that the acetylene, toluene, and oxygen were heated to 115°C before being supplied to the reactor to obtain a carbon black A-1. The obtained carbon black A-1 had a BET specific surface area of 301 m$^2$/g, an average primary particle diameter of 18 nm, and a crystallite size (Lc) of 16.1 Å.

<Production example A-2: Production of carbon black A-2>

Other than changing the oxygen amount in production example A-1 from 23 Nm$^3$/h to 22 Nm$^3$/h, a carbon black A-2 was obtained in the same manner as in production example A-1. The obtained carbon black A-2 had a BET specific surface area of 240 m$^2$/g, an average primary particle diameter of 20 nm, and a crystallite size (Lc) of 16.4 Å.

<Production example A-3: Production of carbon black A-3>

Other than changing the oxygen amount in production example A-1 from 23 Nm$^3$/h to 25 Nm$^3$/h, a carbon black A-3 was obtained in the same manner as in production example A-1. The obtained carbon black A-3 had a BET specific surface area of 350 m$^2$/g, an average primary particle diameter of 17 nm, and a crystallite size (Lc) of 15.6 Å.

<Production example X-1: Production of carbon black X-1>

Other than changing the oxygen amount in production example A-1 from 23 Nm$^3$/h to 21 Nm$^3$/h, a carbon black X-1 was obtained in the same manner as in production example A-1. The obtained carbon black X-1 had a BET specific surface area of 178 m$^2$/g, an average primary particle diameter of 22 nm, and a crystallite size (Lc) of 17.1 Å.

<Production example B-1: Production of carbon black B-1>

Carbon black was produced by supplying the raw materials acetylene, toluene, and oxygen at, respectively, 32 Nm$^3$/h, 12 kg/h, and 20 Nm$^3$/h from a nozzle installed at an upstream section of a carbon black reactor (reactor length 6 m, reactor diameter 0.65 m). The carbon black was collected using a bag filter installed at a downstream section of the reactor. Thereafter, the carbon black passed through a dry cyclone device, passed a magnet for iron removal, and was recovered in a tank. Note that the acetylene, toluene, and oxygen were heated to 115°C before being supplied to the reactor to obtain a carbon black B-1. The obtained carbon black B-1 had a BET specific surface area of 245 m$^2$/g, an average primary particle diameter of 20 nm, and a crystallite size (Lc) of 19.7 Å.

<Production example B-2: Production of carbon black B-2>

Other than changing the oxygen amount in production example B-1 from 20 Nm$^3$/h to 17 Nm$^3$/h, a carbon black B-2 was obtained in the same manner as in production example B-1. The obtained carbon black B-2 had a BET specific surface area of 141 m$^2$/g, an average primary particle diameter of 23 nm, and a crystallite size (Lc) of 23.4 Å.

<Production example B-3: Production of carbon black B-3>

Other than changing the oxygen amount in production example B-1 from 20 Nm$^3$/h to 24 Nm$^3$/h, a carbon black B-3 was obtained in the same manner as in production example B-1. The obtained carbon black B-3 had a BET specific surface area of 370 m$^2$/g, an average primary particle diameter of 16 nm, and a crystallite size (Lc) of 20.5 Å.

<Production example Y-1: Production of carbon black Y-1 >

Other than changing the oxygen amount in production example B-1 from 20 Nm$^3$/h to 5 Nm$^3$/h, a carbon black Y-1 was obtained in the same manner as in production example B-1. The obtained carbon black Y-1 had a BET specific surface area of 68 m$^2$/g, an average primary particle diameter of 35 nm, and a crystallite size (Lc) of 32.4 Å.

Table 1

| CARBON BLACK | A-1 | A-2 | A-3 | X-1 |
|---|---|---|---|---|
| AVERAGE PRIMARY PARTICLE DIAMETER (nm) | 18 | 20 | 17 | 22 |
| BET SPECIFIC SURFACE AREA (m$^2$/g) | 301 | 240 | 350 | 178 |

(continued)

| CARBON BLACK | A-1 | A-2 | A-3 | X-1 |
|---|---|---|---|---|
| LC VALUE (Å) | 16.1 | 16.4 | 15.6 | 17.1 |
| DBP ABSORPTION VALUE (mL/100 g) | 267 | 252 | 284 | 239 |

Table 2

| CARBON BLACK | B-1 | B-2 | B-3 | Y-1 |
|---|---|---|---|---|
| AVERAGE PRIMARY PARTICLE DIAMETER (nm) | 20 | 23 | 16 | 35 |
| BET SPECIFIC SURFACE AREA (m$^2$/g) | 245 | 141 | 370 | 68 |
| LC VALUE (Å) | 19.7 | 23.4 | 20.5 | 32.4 |
| DBP ABSORPTION VALUE (mL/100 g) | 282 | 247 | 305 | 228 |

(Example 1-1)

(1) Preparation of first slurry

The carbon black A-1, N-methyl-2-pyrrolidone (hereinafter NMP) as a liquid medium, and polyvinyl alcohol (Poval B05, manufactured by Denka Co., Ltd.) as a dispersing agent were prepared. 1.0 mass% of the polyvinyl alcohol and 10.0 mass% of the carbon black A-1 were added to 89.0 mass% of the NMP and stirred for 120 minutes using a planetary mixer (Hivis Disper Mix model 3D-5, manufactured by Primix Corporation) to prepare a slurry containing the carbon black A-1. The obtained slurry was loaded into a bead mill (Mugen Flow MGF 2-ZA, manufactured by Ashizawa Finetech Ltd.) equipped with zirconia beads (diameter 0.5 mm) and a dispersion treatment was performed. After performing the dispersion treatment, the zirconia beads were removed by a filter to fabricate a slurry (A-1) of the carbon black A-1.

(2) Preparation of second slurry

The carbon black B-1, N-methyl-2-pyrrolidone (hereinafter NMP) as a liquid medium, and polyvinyl alcohol (Poval B05, manufactured by Denka Co., Ltd.) as a dispersing agent were prepared. 1.0 mass% of the polyvinyl alcohol and 10.0 mass% of the carbon black B-1 were added to 89.0 mass% of the NMP and stirred for 120 minutes using a planetary mixer (Hivis Disper Mix model 3D-5, manufactured by Primix Corporation) to prepare a slurry containing the carbon black B-1. The obtained slurry was loaded into a bead mill (Mugen Flow MGF 2-ZA, manufactured by Ashizawa Finetech Ltd.) equipped with zirconia beads (diameter 0.5 mm) and a dispersion treatment was performed. After performing the dispersion treatment, the zirconia beads were removed by a filter to fabricate a slurry (B-1) of the carbon black B-1.

(3) Preparation of coating liquid for forming positive electrode

The following were prepared: the slurry (A-1); the slurry (B-1); as an active material, lithium nickel manganese cobalt oxide ("ME6E", manufactured by Beijing Easpring Material Technology Co., Ltd.) with an average particle diameter $D_{50}$ of 10 $\mu$m; as a binding material, a polyvinylidene fluoride NMP solution ("L#7208", manufactured by Kureha Corporation); and as a liquid medium, NMP.
Preparation was carried out so that, in terms of solid ratio conversion, the active material was 98.25 mass%, the carbon black A-1 was 0.6 mass%, the carbon black B-1 was 0.15 mass%, and the binding material was 1.0 mass%. The NMP was added until a coatable viscosity was achieved (solid content concentration of 65 mass% or more and 75 mass% or less) and a planetary centrifugal mixer (Awatori Rentaro ARV-310, manufactured by Thinky Corporation) was used to mix until uniform to obtain a coating liquid for forming a positive electrode.

(4) Production of positive electrode

An applicator was used to form the prepared coating liquid for forming a positive electrode into a film on one surface of an aluminum foil (manufactured by UACJ Foil Corporation) with a thickness of 15 $\mu$m to fabricate a laminated body. The laminated body was left to stand in a dryer and pre-dried at 105°C for one hour to completely remove the NMP. After drying, the laminated body was then pressed using a roll press machine at a linear pressure of 200 kg/cm so that the overall thickness of the laminated body was 80 $\mu$m. The laminated body was then vacuum-dried at 170°C for three hours to completely remove residual moisture and obtain a positive electrode provided with a current collector and a composite layer.

(5) Production of negative electrode

The following were prepared: as a solvent, pure water (manufactured by Kanto Kagaku); as a negative electrode active material, artificial graphite ("MAG-D", manufactured by Hitachi Chemical Company, Ltd.); as a binding material, styrene-butadiene rubber (hereinafter SBR) ("BM-400B", manufactured by Zeon Corporation); and as a dispersing agent, carboxymethylcellulose (hereinafter CMC) ("D2200", manufactured by Daicel Corporation). Next, the CMC and the artificial graphite were weighed and mixed so as to be, respectively, 1 mass% by solid content and 97 mass% by solid content. Pure water was added to the mixture and a planetary centrifugal mixer (Awatori Rentaro ARV-310, manufactured by Thinky Corporation) was used to mix until uniform to obtain a mixture. Next, the SBR was weighed so as to be 2 mass% by solid content and was added to the obtained mixture. A planetary centrifugal mixer (Awatori Rentaro ARV-310, manufactured by Thinky Corporation) was used to mix until uniform to obtain a coating liquid for forming a negative electrode. An applicator was then used to form the coating liquid for forming a negative electrode into a film on a copper foil (manufactured by UACJ Foil Corporation) with a thickness of 10 $\mu$m to fabricate a laminated body. The laminated body was left to stand in a dryer and pre-dried at 60°C for one hour. Next, the laminated body was pressed using a roll press machine at a linear pressure of 50 kg/cm so that the overall thickness of the laminated body was 60 $\mu$m. The laminated body was then vacuum-dried at 120°C for three hours to completely remove residual moisture and obtain a negative electrode provided with a current collector and a composite layer.

(6) Production of battery

In a dry room controlled so as to have a dew point of -50°C or less, the fabricated positive electrode was processed to 40×40 mm, the fabricated negative electrode was processed to 44×44 mm, and thereafter, a tab made of aluminum was welded to the positive electrode and a tab made of nickel was welded to the negative electrode. Respective composite material coating surfaces of the positive electrode and the negative electrode were rendered so as to be opposing at central sections and a polyolefin microporous film processed to 45×45 mm was disposed between the positive electrode and the negative electrode. Next, a sheet-type outer covering, processed so as to be 70×140 mm and have cut corners, was folded in two at a central section of the long side. Next, while arranging the outer covering so as to expose the positive electrode aluminum tab and the negative electrode nickel tab to the outside, the laminated body of the positive electrode/polyolefin microporous film/negative electrode was sandwiched by the outer covering that was folded in two. A heat sealer was then used to thermally fuse two sides of the outer covering including a side where the positive electrode aluminum tab and the negative electrode nickel tab were exposed. Thereafter, 2g of an electrolytic solution (solution including ethylene carbonate/diethyl carbonate=1/2 (volume ratio) and a 1M LiPF$_6$ solution, manufactured by Kishida Chemical Co., Ltd.) was injected from one side which had not been thermally fused, and after the electrolytic solution had sufficiently permeated the positive electrode, the negative electrode, and the polyolefin microporous film, a vacuum heat sealer was used to thermally fuse the remaining side of the outer covering while reducing the internal pressure to obtain a lithium-ion secondary battery.

(7) Evaluation

(7-1) Electrode plate resistance

The positive electrode fabricated in (4) above was cut out to a disk shape with a diameter of 14 mm, and with the front and rear surface thereof being pinched by a flat-plate electrode made of SUS304, an electrochemical measurement system (Function generator 1260 and Potentiostat galvanostat 1287, manufactured by Solartron) was used to measure AC impedance at an amplitude voltage of 10 mV and a frequency range of 1 Hz-100 kHz. The obtained resistance component value was multiplied by the surface area of the cut-out disk shape to obtain a resistance value, and the resistance value was used as the electrode plate resistance.

(7-2) Discharge rate properties (rate capacity maintenance ratio)

For the battery fabricated in (6) above, after performing charging at constant current, constant voltage limited to 4.3 V and 0.2 C at 25°C, the battery was discharged to 3.0 V at a 0.2 C constant current. Next, after performing recovery charging, again at constant current, constant voltage limited to 4.3 V and 0.2 C, the battery was discharged to 3.0 V at a 0.2 C constant current, and the discharge capacity at that time was measured. Next, for the recovery charging conditions, the charging was by a constant current, constant voltage limited to 4.3 V and 0.2 C but the recovery charging and the discharging were repeated while the discharge current was changed incrementally so as to be 0.5 C, 1 C, 2 C, and 3 C, and the discharge capacity corresponding to each discharge current was measured. As an indicator of battery discharge rate properties, a capacity maintenance ratio during a 3 C discharge with respect to during a 0.2 C discharge was calculated as a rate capacity maintenance ratio.

(Example 1-2)

Other than using the carbon black B-2 instead of the carbon black B-1 and preparing the constitution of the coating liquid for forming a positive electrode so that, in terms of solid ratio conversion, the active material was 97.7 mass%, the carbon black A-1 was 0.8 mass%, the carbon black B-2 was 0.2 mass%, and the binding material was 1.3 mass%, the production of a positive electrode and the production of a battery were carried out in the same manner as in example 1-1. The obtained positive electrode and battery were evaluated by the same methods as those in example 1-1. The results are shown in Table 3.

(Example 1-3)

Other than using the carbon black B-3 instead of the carbon black B-1 and preparing the constitution of the coating liquid for forming a positive electrode so that, in terms of solid ratio conversion, the active material was 98.25 mass%, the carbon black A-1 was 0.6 mass%, the carbon black B-3 was 0.15 mass%, and the binding material was 1.0 mass%, the production of a positive electrode and the production of a battery were carried out in the same manner as in example 1-1. The obtained positive electrode and battery were evaluated by the same methods as those in example 1-1. The results are shown in Table 3.

(Comparative example 1-1)

Other than using the carbon black Y-1 instead of the carbon black B-1 and preparing the constitution of the coating liquid for forming a positive electrode so that, in terms of solid ratio conversion, the active material was 97.7 mass%, the carbon black A-1 was 0.8 mass%, the carbon black Y-1 was 0.2 mass%, and the binding material was 1.3 mass%, the production of a positive electrode and the production of a battery were carried out in the same manner as in example 1-1. The obtained positive electrode and battery were evaluated by the same methods as those in example 1-1. The results are shown in Table 3.

(Comparative example 1-2)

Other than using the carbon black A-3 instead of the carbon black B-1 and preparing the constitution of the coating liquid for forming a positive electrode so that, in terms of solid ratio conversion, the active material was 98.25 mass%, the carbon black A-1 was 0.6 mass%, the carbon black A-3 was 0.15 mass%, and the binding material was 1.0 mass%, the production of a positive electrode and the production of a battery were carried out in the same manner as in example 1-1. The obtained positive electrode and battery were evaluated by the same methods as those in example 1-1. The results are shown in Table 3.

The evaluation results for examples 1-1 to 1-3 and comparative examples 1-1 and 1-2 are shown in Table 3. Note that in the table: CB1 and CB2 indicate the type of the carbon black; $C_2/C_1$ indicates a ratio (mass ratio) of the content of CB2 with respect to the content of CB1; and $C_1+C_2$ indicates the total amount of CB1 and CB2 (based on the overall weight of the positive electrode composition (solid content in the coating liquid for forming a positive electrode)).

Table 3

|  | EX 1-1 | EX 1-2 | EX 1-3 | COMP EX 1-1 | COMP EX 1-2 |
|---|---|---|---|---|---|
| CB1 | A-1 | A-1 | A-1 | A-1 | A-1 |
| CB2 | B-1 | B-2 | B-3 | Y-1 | A-3 |
| $C_2/C_1$ | 0.25 | 0.25 | 0.25 | 0.25 | 0.25 |
| $C_1+C_2$ | 0.75 | 1.0 | 0.75 | 1.0 | 0.75 |
| ELECTRODE PLATE RESISTANCE ($\Omega \cdot cm^2$) | 175 | 190 | 170 | 280 | 270 |

(continued)

|  | EX 1-1 | EX 1-2 | EX 1-3 | COMP EX 1-1 | COMP EX 1-2 |
|---|---|---|---|---|---|
| RATE CAPACITY MAINTENANCE RATIO (%) | 93 | 91 | 94 | 86 | 85 |

(Example 2-1)

Other than using the carbon black A-2 instead of the carbon black A-1 and preparing the constitution of the coating liquid for forming a positive electrode so that, in terms of solid ratio conversion, the active material was 97.7 mass%, the carbon black A-2 was 0.8 mass%, the carbon black B-1 was 0.2 mass%, and the binding material was 1.3 mass%, the production of a positive electrode and the production of a battery were carried out in the same manner as in example 1-1. The obtained positive electrode and battery were evaluated by the same methods as those in example 1-1. The results are shown in Table 4.

(Example 2-2)

Other than using the carbon black A-3 instead of the carbon black A-1 and preparing the constitution of the coating liquid for forming a positive electrode so that, in terms of solid ratio conversion, the active material was 98.25 mass%, the carbon black A-3 was 0.6 mass%, the carbon black B-1 was 0.15 mass%, and the binding material was 1.0 mass%, the production of a positive electrode and the production of a battery were carried out in the same manner as in example 1-1. The obtained positive electrode and battery were evaluated by the same methods as those in example 1-1. The results are shown in Table 4.

(Comparative example 2-1)

Other than using the carbon black X-1 instead of the carbon black A-1 and preparing the constitution of the coating liquid for forming a positive electrode so that, in terms of solid ratio conversion, the active material was 97.7 mass%, the carbon black X-1 was 0.8 mass%, the carbon black B-1 was 0.2 mass%, and the binding material was 1.3 mass%, the production of a positive electrode and the production of a battery were carried out in the same manner as in example 1-1. The obtained positive electrode and battery were evaluated by the same methods as those in example 1-1. The results are shown in Table 4.

Table 4

|  | EX 2-1 | EX 2-2 | COMP EX 2-1 |
|---|---|---|---|
| CB1 | A-2 | A-3 | X-1 |
| CB2 | B-1 | B-1 | B-1 |
| $C_2/C_1$ | 0.25 | 0.25 | 0.25 |
| $C_1+C_2$ | 1.0 | 0.75 | 1.0 |
| ELECTRODE PLATE RESISTANCE ($\Omega \cdot cm^2$) | 182 | 155 | 320 |
| RATE CAPACITY MAINTENANCE RATIO (%) | 91 | 94 | 82 |

(Example 3-1)

Other than preparing the constitution of the coating liquid for forming a positive electrode so that, in terms of solid ratio conversion, the active material was 98.25 mass%, the carbon black A-1 was 0.675 mass%, the carbon black B-1 was 0.075 mass%, and the binding material was 1.0 mass%, the production of a positive electrode and the production of a battery were carried out in the same manner as in example 1-1. The obtained positive electrode and battery were evaluated by the same methods as those in example 1-1. The results are shown in Table 5.

(Example 3-2)

Other than preparing the constitution of the coating liquid for forming a positive electrode so that, in terms of solid ratio conversion, the active material was 98.25 mass%, the carbon black A-1 was 0.45 mass%, the carbon black B-1 was 0.3 mass%, and the binding material was 1.0 mass%, the production of a positive electrode and the production of a battery were carried out in the same manner as in example 1-1. The obtained positive electrode and battery were evaluated by the same methods as those in example 1-1. The results are shown in Table 5.

(Comparative example 3-1)

Other than preparing the constitution of the coating liquid for forming a positive electrode so that, in terms of solid ratio conversion, the active material was 98.25 mass%, the carbon black A-1 was 0.375 mass%, the carbon black B-1 was 0.375 mass%, and the binding material was 1.0 mass%, the production of a positive electrode and the production of a battery were carried out in the same manner as in example 1-1. The obtained positive electrode and battery were evaluated by the same methods as those in example 1-1. The results are shown in Table 5.

Table 5

|  | EX 1-1 | EX 3-1 | EX 3-2 | COMP EX 3-1 |
|---|---|---|---|---|
| CB1 | A-1 | A-1 | A-1 | A-1 |
| CB2 | B-1 | B-1 | B-1 | B-1 |
| $C_2/C_1$ | 0.25 | 0.1 | 0.4 | 0.50 |
| $C_1+C_2$ | 0.75 | 0.75 | 0.75 | 0.75 |
| ELECTRODE PLATE RESISTANCE ($\Omega \cdot cm^2$) | 175 | 184 | 180 | 260 |
| RATE CAPACITY MAINTENANCE RATIO (%) | 93 | 91 | 92 | 88 |

(Comparative example 4-1)

Other than not using the carbon black B-1 and preparing the constitution of the coating liquid for forming a positive electrode so that, in terms of solid ratio conversion, the active material was 98.25 mass%, the carbon black A-1 was 0.75 mass%, and the binding material was 1.0 mass%, the production of a positive electrode and the production of a battery were carried out in the same manner as in example 1-1. The obtained positive electrode and battery were evaluated by the same methods as those in example 1-1. The results are shown in Table 6.

(Comparative example 4-2)

Other than using only the carbon black A-2 as a carbon black and preparing the constitution of the coating liquid for forming a positive electrode so that, in terms of solid ratio conversion, the active material was 97.7 mass%, the carbon black A-2 was 1.0 mass%, and the binding material was 1.3 mass%, the production of a positive electrode and the production of a battery were carried out in the same manner as in example 1-1. The obtained positive electrode and battery were evaluated by the same methods as those in example 1-1. The results are shown in Table 6.

(Comparative example 4-3)

Other than using only the carbon black A-3 as a carbon black and preparing the constitution of the coating liquid for forming a positive electrode so that, in terms of solid ratio conversion, the active material was 98.25 mass%, the carbon black A-3 was 0.75 mass%, and the binding material was 1.0 mass%, the production of a positive electrode and the production of a battery were carried out in the same manner as in example 1-1. The obtained positive electrode and battery were evaluated by the same methods as those in example 1-1. The results are shown in Table 6.

(Comparative example 4-4)

Other than using only the carbon black X-1 as a carbon black and preparing the constitution of the coating liquid for forming a positive electrode so that, in terms of solid ratio conversion, the active material was 97.7 mass%, the carbon black X-1 was 1.0 mass%, and the binding material was 1.3 mass%, the production of a positive electrode and the production of a battery were carried out in the same manner as in example 1-1. The obtained positive electrode and battery were evaluated by the same methods as those in example 1-1. The results are shown in Table 6.

(Comparative example 4-5)

Other than using only the carbon black B-1 as a carbon black and preparing the constitution of the coating liquid for forming a positive electrode so that, in terms of solid ratio conversion, the active material was 98.25 mass%, the carbon black B-1 was 0.75 mass%, and the binding material was 1.0 mass%, the production of a positive electrode and the production of a battery were carried out in the same manner as in example 1-1. The obtained positive electrode and battery were evaluated by the same methods as those in example 1-1. The results are shown in Table 7.

(Comparative example 4-6)

Other than using only the carbon black B-2 as a carbon black and preparing the constitution of the coating liquid for forming a positive electrode so that, in terms of solid ratio conversion, the active material was 97.7 mass%, the carbon black B-2 was 1.0 mass%, and the binding material was 1.3 mass%, the production of a positive electrode and the production of a battery were carried out in the same manner as in example 1-1. The obtained positive electrode and battery were evaluated by the same methods as those in example 1-1. The results are shown in Table 7.

(Comparative example 4-7)

Other than using only the carbon black B-3 as a carbon black and preparing the constitution of the coating liquid for forming a positive electrode so that, in terms of solid ratio conversion, the active material was 98.25 mass%, the carbon black B-3 was 0.75 mass%, and the binding material was 1.0 mass%, the production of a positive electrode and the production of a battery were carried out in the same manner as in example 1-1. The obtained positive electrode and battery were evaluated by the same methods as those in example 1-1. The results are shown in Table 7.

Table 6

| | COMP EX 4-1 | COMP EX 4-2 | COMP EX 4-3 | COMP EX 4-4 |
|---|---|---|---|---|
| CB1 | A-1 | A-2 | A-3 | X-1 |
| CB2 | - | - | - | - |
| $C_2/C_1$ | - | - | - | - |
| $C_1+C_2$ | 0.75 | 1.0 | 0.75 | 1.0 |
| ELECTRODE PLATE RESISTANCE ($\Omega \cdot cm^2$) | 220 | 270 | 260 | 450 |
| RATE CAPACITY MAINTENANCE RATIO (%) | 89 | 87 | 86 | 80 |

Table 7

| | COMP EX 4-5 | COMP EX 4-6 | COMP EX 4-7 |
|---|---|---|---|
| CB1 | - | - | - |
| CB2 | B-1 | B-2 | B-3 |
| $C_2/C_1$ | - | - | - |
| $C_1+C_2$ | 0.75 | 1.0 | 0.75 |
| ELECTRODE PLATE RESISTANCE ($\Omega \cdot cm^2$) | 375 | 490 | 240 |
| RATE CAPACITY | 87 | 78 | 88 |
| MAINTENANCE RATIO (%) | | | |

As shown in Tables 3 to 7, in the examples corresponding to the embodiment described above, the electrode plate resistance was a small value of $200 \, \Omega \cdot cm^2$ or less and the rate capacity maintenance ratio was a high value of 90% or more. From the foregoing result, it was confirmed that according to the above embodiment, there is realized a battery having small internal resistance and excellent discharge rate properties.

**Claims**

1. A positive electrode composition containing a first carbon black, a second carbon black, and an active material, wherein:

   the first carbon black has a BET specific surface area of 200 $m^2/g$ or more and a crystallite size (Lc) of 17 Å or less;
   the second carbon black has a BET specific surface area of 100 $m^2/g$ or more and a crystallite size (Lc) of 19 Å or more; and
   a ratio $C_2/C_1$ of a content $C_2$ of the second carbon black with respect to a content $C_1$ of the first carbon black is 0.1 or more and 0.45 or less.

2. The positive electrode composition according to claim 1, wherein:

   the BET specific surface area of the first carbon black is 200 $m^2/g$ or more and 400 $m^2/g$ or less; and
   the BET specific surface area of the second carbon black is 100 $m^2/g$ or more and 400 $m^2/g$ or less.

3. The positive electrode composition according to claim 1, wherein:

   the crystallite size (Lc) of the first carbon black is 14 Å or more and 17 Å or less; and
   the crystallite size (Lc) of the second carbon black is 19 Å or more and 25 Å or less.

4. A positive electrode comprising a composite layer comprising the positive electrode composition according to any one of claims 1-3.

5. A battery comprising the positive electrode according to claim 4.

6. A coating liquid for forming a positive electrode, the coating liquid containing a first carbon black, a second carbon black, an active material, and a liquid medium wherein:

   the first carbon black has a BET specific surface area of 200 $m^2/g$ or more and a crystallite size (Lc) of 17 Å or less;
   the second carbon black has a BET specific surface area of 100 $m^2/g$ or more and a crystallite size (Lc) of 19 Å or more; and
   a ratio $C_2/C_1$ of a content $C_2$ of the second carbon black with respect to a content $C_1$ of the first carbon black is 0.1 or more and 0.45 or less.

7. A method for producing a coating liquid for forming a positive electrode, the method comprising

   a slurry preparation step for preparing a first slurry containing a first carbon black and a first liquid medium, and a second slurry containing a second carbon black and a second liquid medium, and
   a mixing step for mixing the first slurry, the second slurry, and an active material to obtain a coating liquid for forming a positive electrode,

   wherein:

   the first carbon black has a BET specific surface area of 200 $m^2/g$ or more and a crystallite size (Lc) of 17 Å or less;
   the second carbon black has a BET specific surface area of 100 $m^2/g$ or more and a crystallite size (Lc) of 19 Å or more; and
   a ratio $C_2/C_1$ of a content $C_2$ of the second carbon black with respect to a content $C_1$ of the first carbon black in the coating liquid for forming a positive electrode is 0.1 or more and 0.45 or less.

8. A method for producing a positive electrode including a current collector and a composite layer, the method comprising

   a coating liquid preparation step for preparing a coating liquid for forming a positive electrode, the coating liquid containing a first carbon black, a second carbon black, an active material, and a liquid medium, and
   a positive electrode formation step for coating a current collector with the coating liquid for forming a positive electrode to form the composite layer on the current collector,

   wherein:

the first carbon black has a BET specific surface area of 200 $m^2$/g or more and a crystallite size (Lc) of 17 Å or less; the second carbon black has a BET specific surface area of 100 $m^2$/g or more and a crystallite size (Lc) of 19 Å or more; and a ratio $C_2/C_1$ of a content $C_2$ of the second carbon black with respect to a content $C_1$ of the first carbon black in the coating liquid for forming a positive electrode is 0.1 or more and 0.45 or less.

9. The production method according to claim 8, wherein the coating liquid preparation step is a step in which the coating liquid for forming a positive electrode is obtained by the production method according to claim 7.

10. A method for producing a battery provided with a positive electrode including a current collector and a composite layer, the method comprising

a coating liquid preparation step for preparing a coating liquid for forming a positive electrode, the coating liquid containing a first carbon black, a second carbon black, an active material, and a liquid medium, and a positive electrode formation step for coating a current collector with the coating liquid for forming a positive electrode to form the composite layer on the current collector,

wherein:

the first carbon black has a BET specific surface area of 200 $m^2$/g or more and a crystallite size (Lc) of 17 Å or less; the second carbon black has a BET specific surface area of 100 $m^2$/g or more and a crystallite size (Lc) of 19 Å or more; and a ratio $C_2/C_1$ of a content $C_2$ of the second carbon black with respect to a content $C_1$ of the first carbon black in the coating liquid for forming a positive electrode is 0.1 or more and 0.45 or less.

11. The production method according to claim 10, wherein the coating liquid preparation step is a step in which the coating liquid for forming a positive electrode is obtained by the production method according to claim 7.

## INTERNATIONAL SEARCH REPORT

| International application No. |
| --- |
| **PCT/JP2023/037547** |

**A.      CLASSIFICATION OF SUBJECT MATTER**

*H01M 4/62*(2006.01)i; *H01M 4/02*(2006.01)i; *H01M 4/04*(2006.01)i; *H01M 4/13*(2010.01)i; *H01M 4/139*(2010.01)i
FI:     H01M4/62 Z; H01M4/13; H01M4/139; H01M4/02 Z; H01M4/04 Z

According to International Patent Classification (IPC) or to both national classification and IPC

**B.      FIELDS SEARCHED**

Minimum documentation searched (classification system followed by classification symbols)

        H01M4/62; H01M4/02; H01M4/04; H01M4/13; H01M4/139

Documentation searched other than minimum documentation to the extent that such documents are included in the fields searched

        Published examined utility model applications of Japan 1922-1996
        Published unexamined utility model applications of Japan 1971-2023
        Registered utility model specifications of Japan 1996-2023
        Published registered utility model applications of Japan 1994-2023

Electronic data base consulted during the international search (name of data base and, where practicable, search terms used)

**C.      DOCUMENTS CONSIDERED TO BE RELEVANT**

| Category* | Citation of document, with indication, where appropriate, of the relevant passages | Relevant to claim No. |
| --- | --- | --- |
| A | JP 2000-058040 A (TOYOTA CENTRAL RES. & DEV. LAB. INC., DENSO CORP.) 25 February 2000 (2000-02-25) | 1-11 |
| A | JP 2005-293931 A (SANYO ELECTRIC CO., LTD.) 20 October 2005 (2005-10-20) | 1-11 |
| A | JP 2006-128119 A (SAMSUNG SDI CO., LTD.) 18 May 2006 (2006-05-18) | 1-11 |
| A | WO 2022/118920 A1 (DENKA COMPANY LIMITED) 09 June 2022 (2022-06-09) | 1-11 |
| A | JP 6-187989 A (FUJI ELELCTROCHEM. CO., LTD.) 08 July 1994 (1994-07-08) | 1-11 |
| A | WO 2005/012438 A1 (MITSUBISHI CHEMICAL CORPORATION) 10 February 2005 (2005-02-10) | 1-11 |

☑ Further documents are listed in the continuation of Box C.      ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **26 December 2023** | **16 January 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
| --- |
| **PCT/JP2023/037547** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2014/132809 A1 (TOYO INK SC HOLDINGS CO., LTD., TOYOCOLOR CO., LTD.) 04 September 2014 (2014-09-04) | 1-11 |

Form PCT/ISA/210 (second sheet) (January 2015)

**INTERNATIONAL SEARCH REPORT**
Information on patent family members

International application No.

**PCT/JP2023/037547**

| Patent document cited in search report | | | Publication date (day/month/year) | Patent family member(s) | | | Publication date (day/month/year) |
|---|---|---|---|---|---|---|---|
| JP | 2000-058040 | A | 25 February 2000 | (Family: none) | | | |
| JP | 2005-293931 | A | 20 October 2005 | (Family: none) | | | |
| JP | 2006-128119 | A | 18 May 2006 | EP | 1653534 | A1 | |
| | | | | US | 2006/0093920 | A1 | |
| | | | | KR | 10-2006-0037618 | A | |
| | | | | CN | 1770516 | A | |
| WO | 2022/118920 | A1 | 09 June 2022 | EP | 4234637 | A1 | |
| | | | | CN | 116457428 | A | |
| | | | | KR | 10-2023-0097017 | A | |
| JP | 6-187989 | A | 08 July 1994 | (Family: none) | | | |
| WO | 2005/012438 | A1 | 10 February 2005 | US | 2006/0186383 | A1 | |
| | | | | EP | 1666543 | A1 | |
| | | | | CN | 1829776 | A | |
| | | | | JP | 2006-52237 | A | |
| WO | 2014/132809 | A1 | 04 September 2014 | CN | 105073915 | A | |
| | | | | KR | 10-2015-0123826 | A | |
| | | | | JP | 2014-193986 | A | |
| | | | | JP | 2015-101615 | A | |
| | | | | JP | 2014-194001 | A | |
| | | | | JP | 2014-193996 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008227481 A